# EUROPEAN PATENT SPECIFICATION

(11) **EP 0 534 947 B1**
(45) Date of publication and mention of the grant of the patent: **25.09.1996**
(21) Application number: 90903177.5
(22) Date of filing: 16.02.1990
(51) Int. Cl.: B66C 13/46

(54) **A TRANSPORT MEANS FOR TRANSPORTING PIECES THREE-DIMENSIONALLY**
FÖRDERSYSTEM ZUM FÖRDERN VON GEGENSTÄNDEN IM RAUM
SYSTEME DE TRANSPORT SERVANT A TRANSPORTER DES PIECES DANS L'ESPACE

(30) Priority: 17.02.1989 FI 890788
(43) Date of publication of application: 07.04.1993
(73) Proprietor: ERIKKILä KY, SF-02780 Espoo (FI)
(72) Inventor: ERIKKILÄ, Jouni, SF-02780 Espoo (FI)
(74) Representative: Kristiansen, Alf P.
(86) International application number: FI9000051
(87) International publication number: WO9009337

(56) References cited:
- EP-A- 0 077 085
- FR-A- 2 540 087
- SE-B- 0 342 027
- US-A- 3 777 908
- US-A- 3 973 683

## Description

The present invention concerns a transport means as defined in the preamble to claim 1.

In automation of industrial production and warehouses, various transport means are required which are able to meet various, and continuously changing, piece handling needs. The variables which impose the demand of flexibility on piece handling systems include variable series sizes, variable loads to be transported, and variation of piece sizes. In addition, comparatively high transporting and positioning accuracy is required of the piece handling systems. Transporting and positioning accuracy is understood to mean that the transport means will transport each piece, conforming accurately to the paths defined for it and will position itself so that the true position of the transport means is accurately consistent with the position defined for it.

For use in such applications is known a transport means for transporting objects, comprising
a pair of side-by-side parallel and horizontal bridge sections, said bridge sections being of a box-type configuration:
a pair of bridge carriages including power means mounted thereon, said bridge carriages being carried by said bridge sections and movable thereon;
a pair of side-by-side parallel and horizontal transport sections being substantially at right angles with respect to said pair of bridge sections, said transport sections being carried by said pair of bridge carriages, said transport sections having a box-type configuration;
a pair of transport carriages having power means, said transport carriages being mounted on said pair of transport sections and being movable thereon;
a lifting frame carried by said transport carriages;
a lifting means for lifting objects including power means, said lifting means being mounted on said lifting frame for vertically moving objects;
an elongated traction member on each of said bridge carriages for moving said transport sections and an elongated traction member on each of said transport sections for moving each transport carriage, said elongated traction members being disposed along and inside a substantial part of a length of said sections;
return sheaves placed in pairs on said bridge sections and transport sections at a fixed spacing between said sheave pairs, a traction member disposed to run from each of said pair of return sheaves from one end of each of said bridge and transport carriages over said return sheaves and back to said bridge and transport carriages at their remaining end, in order to form a separate loop of each traction member and each carriage;
power means connected to said pair of return sheaves to move said traction member and in response thereto, their respective bridge and transport carriages.

In a transport means of this kind, known in the art, the arrangement known through the reference EP 0 200 694 can be used, in which the traction member is disposed to run from the carriage and over the return sheaves back to the respective carriage in order to create a closed loop of the traction member and of the respective carriage. Since it is important to maintain transporting and positioning accuracy in the transport means, the traction member has to be pulled taut from time to time. In the transport means of the reference EP 0 200 694 this tensioning of the traction member has been solved by a design in which one of the two return sheaves is arranged to be adjustable as to its position in the longitudinal direction of the section so that the distance between the return sheaves is adjustable.

The major problem inherent in such an arrangement of traction member tensioning, known in the art through the reference EP 0 200 694, is that only rather short transporting movements are possible when it is applied. This is due to the fact that the tensioning length which the tensioning means is required to afford increases with increasing length of the transport movement and with increasing length of the traction member. With the arrangement of prior art a transport movement length is accomplished which is on the order of 15 meters only. This maximum transport length implies that the tensioning means of prior art displaces the return sheave about 0.8 to 1 m, depending also on the distensibility of the traction member. This, and an adjustment allowance greater than this, is exceedingly cumbersome to provide in practice. Therefore, the tensioning means of prior art becomes a factor limiting the length of the transport movement. Furthermore, an adjustment allowance provided on the end of the section consumes quite much space, with the consequence that the effective area where the load can be transported will be small in the case of the tensioning means arrangement of prior art.

It is another problem associated with the arrangement of prior art, that its tensioning arrangement is complicated as regards its construction. Moreover, the operation in which the traction member is tensioned may be exceedingly awkward, because the tensioning can be carried out tied to one single location, only by regulating the return wheel on the end of the section.

In an embodiment of the transport means, the traction member is a cog belt. The traction member may naturally equally be any other kind of elongated traction member known in the art, e.g. a chain, rope or the like. Using a cog belt in this connection is however advantageous because in that case no slipping whatsoever can occur between the return sheaves and the cog belt, and accurate transport motion is thus obtained. In addition, a cog belt drive is noiseless and requires little maintenance.

In an embodiment of the transport means, the bridge carriage comprises a roller assembly, disposed to travel inside the bridge section; and the bridge carriage has been installed to be suspended, and carried on the roller assembly.

In an embodiment of the transport means, the transport carriage comprises a roller assembly, disposed to travel inside the transport section; and the transport carriage has been installed to be suspended, and carried on the roller assembly.

When the roller assembly is travelling inside the section, a safe transport means is achieved of which the structures cannot become separated from each other under any circumstances whatsoever.

In an embodiment of the transport means, the power means is connected to a return sheave.

In an embodiment of the transport means, the transport means comprises a first pick-up for determining the position of the bridge carriages; a second pick-up for determining the position of the transport carriages; a third pick-up for determining the position of the lifting means; and a control means for processing the signals obtained from the pick-ups and controlling the movements of the transport means.

In an embodiment of the transport means, the first, second and third pick-ups are angle sensors, advantageously optical increment sensors, disposed to transmit signals to the control means. With the aid of the pick-ups, the control means is enabled to control accurately the motions of the transport means. The control means identifies with the aid of the pick-ups at any moment the three-dimensional position of the transport means and is thus enabled to control its motions in a pre-programmed way.

In an embodiment of the transport means, the lifting means comprises an upright beam, provided with mutually parallel guide rails affixed to opposite sides; the lifting frame comprises guide roller assemblies, and the guide rails and guide roller assemblies are so disposed that they guide, in cooperation, the vertical movement of the upright beam.

In an embodiment of the transport means, the guide roller assembly comprises two side wheels which rest against the guide rail on either side thereof; the axes of rotation of said side wheels are eccentric relative to their mounting axles, and when the mounting axles are rotated, adjustment of the clearance between the guide rail and the side wheels is enabled. Hereby the play between the guide rails of the upright beam and the side wheels can be adjusted to minimum, thus minimizing the undesirable lateral movements of the upright beam relative to the lifting frame.

In an embodiment of the transport means, the lifting means comprises a chain or equivalent, connected to and parallelling the upright beam; a traction wheel which connects with the chain by gear transmission; and a power means arranged to rotate the traction wheel.

In an embodiment of the transport means, the traction wheel is disposed at a distance from the upright beam, and the lifting means comprises deflection sheaves, disposed to deflect the chain to go to the traction wheel. An arrangement like this affords the possibility that the traction wheel need not be placed close to the upright beam, whereby space considerations cause no problems when the power means and transmission ratios are being selected.

In an embodiment of the transport means, the power means is a squirrel cage motor.

In an embodiment of the transport means, the power means are squirrel cage motors controlled with the aid of frequency converters, for adjusting the speeds. It is advantageous in the transporting event to decelerate the velocities of the various motions of the transport means just before stopping, so that stopping might occur at the correct point with maximum accuracy.

In an embodiment of the transport means, the interior space of the upright beam and of the lifting frame constitutes a vacuum tank to back up the vacuum of the vacuum-operated action means. The action means may for instance be a vacuum-operated clamp, which needs for back-up, e.g. in the event of mains failure, a vacuum tank which makes sure that the clamp will not let go of the load unexpectedly and at the wrong moment. Using the interior space of the upright beam or of the lifting frame for vacuum tank is advantageous in view of producing a compact design in which no special, separate vacuum tank is needed, which would add to the weight of the structure and would complicate it. The action means connected with the transport means may, of course, be any kind of action means which is appropriate for the particular application.

The invention is based on the important observation that it is possible with a combination of standard crane components to produce a transport means transporting pieces three-dimensionally by which at the same time adequate transporting and positioning accuracy can be achieved. At the same time, its initial cost is a fraction of the initial cost of an equivalent piece handling robot of prior art.

The advantage offered by the invention is that a means enabling automatically produced lifting and transporting functions of comparatively large masses can be produced at favourable cost.

It is a further advantage of the invention that the transporting and positioning accuracy therewith achievable is high.

Furthermore, with the invention a transport means of simple construction is obtained and which is virtually maintenance-free.

In the following the invention is described in detail, referring to the attached drawing, wherein
Fig. 1 presents a transport means according to an embodiment of the invention, viewed obliquely from above.
Fig. 2 presents a transport means according to another embodiment of the invention, in elevational view,
Fig. 3 presents the transport means of Fig. 2, viewed from the front,
Fig.4 presents the guide roller assembly of the lifting means of a transport means according to a third embodiment of the invention, sectioned and in top view, and
Fig. 5 shows the section V-V of Fig. 4.

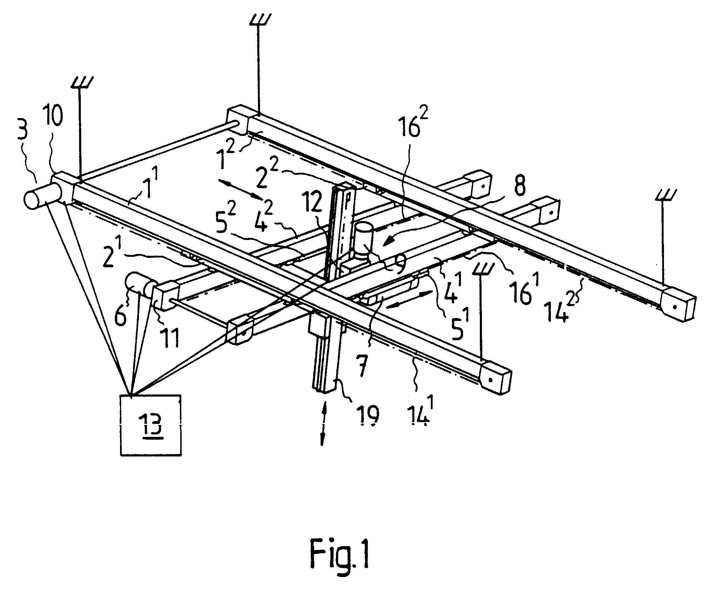

In Fig. 1 is depicted a transport means for transporting pieces three-dimensionally. The transport means comprises two side-by-side, parallel and horizontal bridge sections 1¹,1²; two bridge carriages 2¹,2² which are provided with a power means 3 and installed to be carried on the bridge sections 1¹,1², movably in their direction; two transport sections 4¹,4² which are side-by-side, parallel and horizontal, substantially at right angles against the bridge sections 1¹,1² and installed to be carried on the bridge carriages 2¹,2²; two transport carriages 5¹,5² which are provided with a power means 6 and installed to be carried on the transport sections 4¹,4², movably in their direction; a lifting frame 7 which is installed to be carried by the transport carriages 5¹,5²; a lifting means 8 which is provided with a power means 9 and mounted on the lifting frame, movable in the vertical direction; a first pick-up 10 for determining the position of the bridge carriages 2¹,2²; a second pick-up 11 for determining the position of the transport carriages 5¹,5²; a third pick-up 12 for determining the position of the lifting means 8; and a control means 13 for processing the signals from the pick-ups 10, 11 and 12 and for controlling the movements of the transport means.

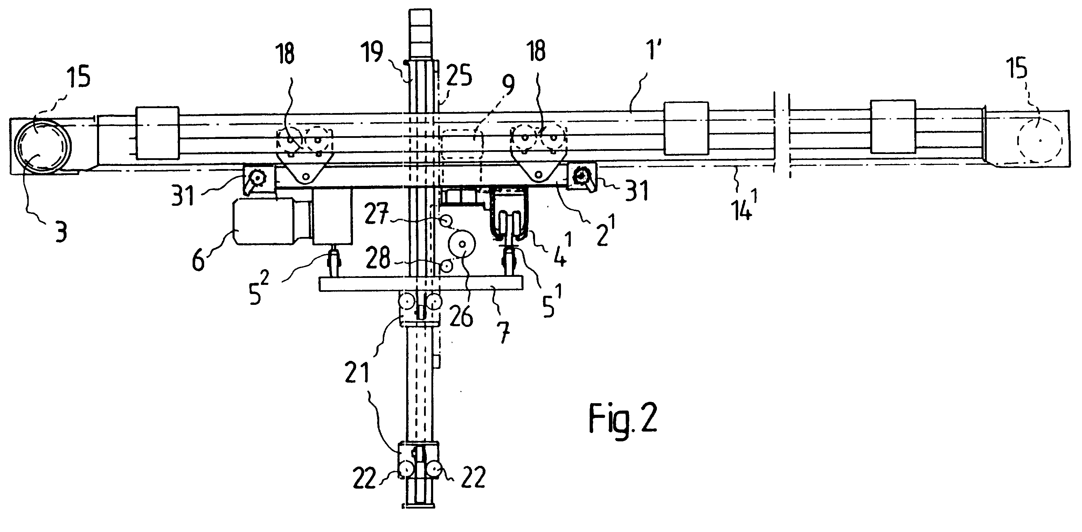

In the embodiment of Fig. 2, presented in elevational view, can be seen the elongated traction member 14¹,14² belonging to the bridge carriage 2¹,2². The transport means further comprises two return sheaves 15, which have been spaced at the distance of the bridge section 1¹,1², with the bridge carriage 2¹,2² between the return sheaves 15. It also includes a power means 3 for moving the traction member 14¹,14². The traction member has been disposed to run from the bridge carriage over the return sheaves and back to the bridge carriage. The traction member 14¹ is seen, shown as a dotted line.

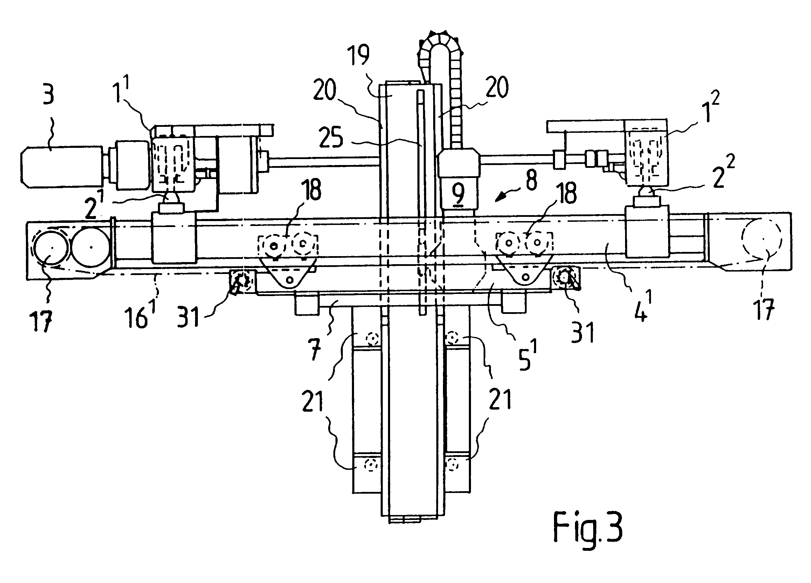

In the end view of Fig. 3 can be seen the elongated traction member 16¹,16² belonging to the transport carriage 5¹,5². The transport means further comprises two return sheaves 17, which have been spaced at the distance of the transport section 4¹,4², the transport carriage 5¹,5² being located between said return sheaves. Furthermore, it comprises a power means 6 for moving the traction member. The traction member runs from the transport carriage over the return sheaves and back to the transport carriage. The traction member 16¹ is seen in the figure, depicted with a dot-and dash line.

The traction members 14¹, 14², 16¹ and 16² are cog belts which have been secured to the bridge and transport carriages 2¹,2²,5¹,5² with the aid of tensioning means 31.

The return sheaves 15,17 are located on the ends of the bridge sections 1¹,1² and of the transport sections 4¹,4². The traction members 14¹,14²,16¹,16² have been disposed to run inside the sections. The power means 3 is connected to the return sheaves on one end of the bridge sections, which are interconnected by a transmission shaft. The power means 6 is likewise connected to the return sheave on one end of the transport section. There may, of course, also be a specific power means for each return sheave on one end of the section.

The power means 3 and 6 may for instance be squirrel cage motors controlled with the aid of frequency converters, in which case the speed of rotation of the motors, and thus the velocities of the movements of the transport means can be controlled as desired, e.g. slightly before positioning, the velocity is dropped to a very low value, whereby high accuracy is achieved in stopping at a predetermined point.

The bridge carriages 2¹,2² and the transport carriages 5¹,5² comprise roller assemblies 18, which have been disposed to run inside the bridge sections 1¹,1² and the transport sections 4¹,4².

The lifting means 8 comprises an upright beam 19, provided with parallel guide rails 20 fixed on opposite sides, there being two such rails in this instance. The lifting frame 7 comprises guide roller assemblies 21, of which the number is four in the present instance. The guide rails 20 and guide roller assemblies 21 are so disposed that they guide, in cooperation, the vertical motion of the upright beam 19.

The lifting means 8 comprises a chain 25 or equivalent connected to the upright beam 19 and parallel to it. The traction wheel 26 belonging to the lifting means is connected with the chain by a gear transmission. The power means 9 has been disposed to drive the traction wheel. The power means is advantageously a squirrel cage motor.

The traction wheel 26 is disposed at a distance from the upright beam 19, and the lifting means comprises traversing wheels 27 and 28, disposed to deflect the chain 25 to the traction wheel.

The interior spaces of the upright beam 19 and of the lifting frame 7 constitute a vacuum tank for backing up the vacuum of the vacuum-operated action means 30.

The first 10, second 11 and third pick-up 12 are pulse transmitters, advantageously optical increment transmitters, arranged to transmit signals to the control means 13.

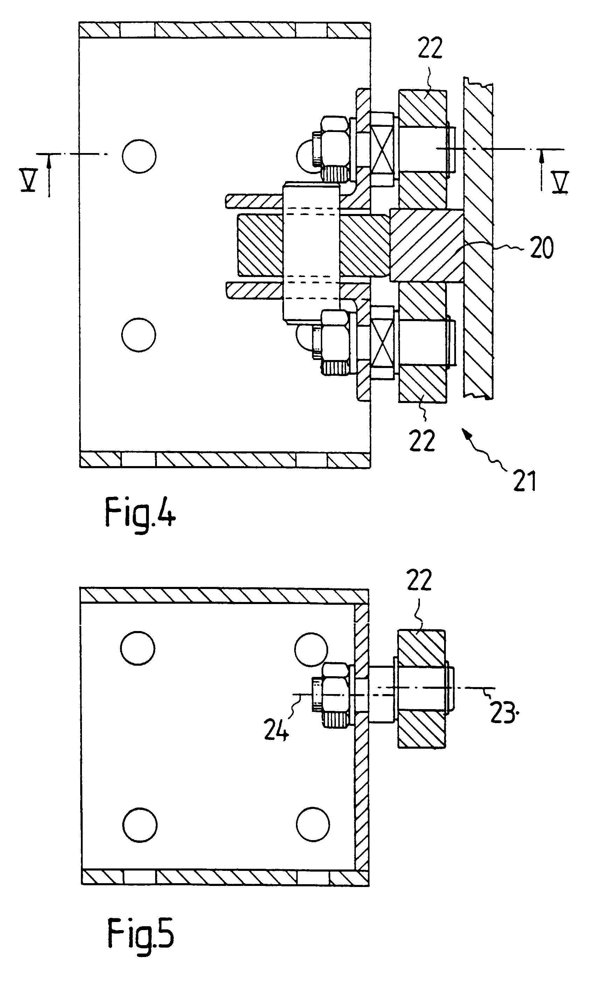

The guide roller assembly 21, depicted in Figs 4 and 5, comprises two side wheels 22 resting against the guide rail 20, on either side thereof. The rotation axles 23 of the side wheels are eccentrically offset relative to their mounting axles 24. By rotating the mounting axles 24, the clearance play between the guide rail 20 and the side wheels 22 can be adjusted.

The invention is not delimited merely to concern the embodiment examples presented in the foregoing: numerous modifications thereof are feasible without departing from the scope of the inventive idea defined by the claims.

## Claims

1. A transport means for transporting objects, comprising:
a pair of side-by-side parallel and horizontal bridge sections (1¹, 1²), said bridge sections being of a box-type configuration:
a pair of bridge carriages (2¹, 2²) including power means (3) mounted thereon, said bridge carriages being carried by said bridge sections (1¹, 1²) and movable thereon;
a pair of side-by-side parallel and horizontal transport sections (4¹, 4²) being substantially at right angles with respect to said pair of bridge sections (1¹, 1²), said transport sections being carried by said pair of bridge carriages (2¹, 2²), said transport sections having a box-type configuration;
a pair of transport carriages (5¹, 5²) having power means (6), said transport carriages being mounted on said pair of transport sections (4¹, 4²) and being movable thereon;
a lifting frame (7) carried by said transport carriages (5¹, 5²);
a lifting means (8) for lifting objects including power means (9), said lifting means being mounted on said lifting frame (7) for vertically moving objects;
an elongated traction member (14¹, 14²) on each of said bridge carriages (2¹, 2²) for moving said transport sections (4¹, 4²) and an elongated traction member (16¹, 16²) on each of said transport sections (4¹, 4²) for moving each transport carriage (5¹, 5²), said elongated traction members being disposed along and inside a substantial part of a length of said sections;
return sheaves (15, 17) placed in pairs on said bridge sections (1¹, 1²) and transport sections (4¹, 4²) at a fixed spacing between said sheave pairs, a traction member disposed to run from each of said pair of return sheaves from one end of each of said bridge and transport carriages over said return sheaves and back to said bridge and transport carriages at their remaining end, in order to form a separate loop of each traction member and each carriage;
power means (3, 6) connected to said pair of return sheaves (15, 17) to move said traction member (14¹, 14², 16¹, 16²) and in response thereto, their respective bridge and transport carriages (2¹, 2², 5¹, 5²), **characterized in** that tension adjusting means (31) are mounted on said bridge and transport carriages (2¹, 2², 5¹, 5²), intermediate said sheaves (15, 17), for adjusting the tension of the elongated traction member (14¹, 14², 16¹, 16²) without adjusting the spacing between said return sheaves.

2. A transport means according to claim 1 wherein said lifting means includes an upright beam provided with a pair of parallel guide rails to guide the vertical movement of said beam when an object is raised or lowered.

3. Transport means according to claim 1 or 2, **characterized in** that the traction member (14¹, 14², 16¹, 16²) is a cog belt.

4. Transport means according to claim 1, 2 or 3, **characterized in** that the bridge carrier (2¹, 2²) comprises a roller assembly (18) which has been disposed to run inside the bridge section (1¹, 1²); and that the bridge carriage is installed to be suspended, and carried by said roller assembly.

5. Transport means according to any one of claims 1-4, **characterized in** that the transport carriage is disposed to run inside the transport section (4¹, 4²); and that the transport carriage is installed to be suspended, and carried by said roller assembly.

6. Transport means according to any one of claims 1-5, **characterized in** that the transport means comprises a first pick-up (10) for determining the position of the bridge carriages (2¹, 2²); a second pick-up (11) for determining the position of the transport carriages (5¹, 5²); a third pick-up (12) for determining the position of the lifting means; and a control means (13) for processing the signals from said pick-ups and for controlling the movements of the transport means.

7. Transport means according to claim 6, **characterized in** that the first (10), second (11) and third (12) pick-ups are pulse transmitters, advantageously optical increment transmitters which have been disposed to transmit signals to the control means (13).

8. Transport means according to any one of claims 1-7, **characterized in** that the lifting means (8) comprises an upright beam (19), provided with parallel guide rails (20) fixed on opposite sides; the lifting frame (7) comprises guide roller assemblies (21), and that the guide rails and guide roller assemblies are so disposed that they guide, in cooperation, the vertical movement of the upright beam.

9. Transport means according to claim 8, **characterized in** that the guide roller assembly (21) comprises two side wheels (22) which rest against the guide rail (20) on either side thereof; that the axles of rotation (23) of the side wheels are eccentric relative to their fixing axles (24), and that by rotating the fixing axles the play between the guide rail and the side wheels can be adjusted.

10. Transport means according to claim 8 or 9, **characterized in** that the lifting means (8) comprises a chain (25) or equivalent connected to the upright beam (19) and parallel to it; a traction wheel (26) which communicates with the chain by means of a gear transmission; and a power means (9) which has been arranged to rotate the traction wheel.

11. Transport means according to claim 10, **characterized in** that the traction wheel (26) has been disposed at a distance from the upright beam (19) and the lifting means comprises traversing wheels (27) and (28), which have been arranged to deflect the chain (25) to the traction wheel.

12. Transport means according to any one of claims 1-11, **characterized in** that the power means (3, 6, 9) is a squirrel cage motor.

13. Transport means according to any one of claims 1-12, **characterized in** that the power means (3) and (6) are squirrel cage motors controlled with the aid of frequency converters, to control velocities.

14. Transport means according to any one of claims 1-13, **characterized in** that the interior space of the upright beam (19) and/or the lifting frame (7) constitutes a vacuum tank to back up a vacuum, for a vacuum-operated action means (30).

## Patentansprüche

1. Ein Transportmittel zum Transportieren von Gegenständen, umfassend
ein Paar nebeneinander parallel angeordneter und horizontaler Brückenabschnitte (1¹, 1²), wobei diese Brückenabschnitte eine kastenartige Konfiguration haben;
ein Paar Brückenwagen (2¹, 2²), umfassend darauf angebrachte Antriebsmittel (3), wobei die Brückenwagen von den Brückenabschnitten (1¹, 1²) getragen und darauf bewegbar sind;
ein Paar nebeneinander parallel angeordneter und horizontaler Transportabschnitte (4¹, 4²), die sich im wesentlichen im rechten Winkel zu dem Paar Brückenabschnitte (1¹, 1²) befinden, wobei die Transportabschnitte von dem Paar Brückenwagen (2¹, 2²) getragen sind und kastenförmige Konfiguration haben;
ein Paar Transportwagen (5¹, 5²) mit Antriebsmitteln (6), wobei die Transportwagen auf dem Paar Transportabschnitten (4¹, 4²) angebracht und darauf bewegbar sind;
einen Hubrahmen (7), getragen von den Transportwagen (5¹, 5²);
ein Hubmittel (8) zum Heben von Gegenständen umfassend Antriebsmittel (9), wobei das Hubmittel auf dem Hubrahmen (7) zum vertikalen Bewegen von Gegenständen angeordnet ist;
ein langgestrecktes Zugglied (14¹, 14²) an jedem der Brückenwagen (2¹, 2²) zum Bewegen der Transportabschnitte (4¹, 4²) und ein langgestrecktes Zugglied (16¹, 16²) an jedem der Transportabschnitte (4¹, 4²) zum Bewegen jeden Transportwagens (5¹, 5²), wobei die langgestreckten Zugglieder entlang und innerhalb eines wesentlichen Teils der Länge der Abschnitte angeordnet sind;
Umlenkscheiben (15, 17), die paarweise auf den Brückenabschnitten (1¹, 1²) und Transportabschnitten (4¹, 4²) in einem festen Abstand zwischen den Umlenkscheiben angeordnet sind, wobei ein Zugglied jedes Umlenkscheibenpaars von einem Ende jeder der Brücken- und Transportwagen über die Umlenkscheiben und zurück zu besagtem Brücken- und Transportwagen an deren anderem Ende verläuft, um so eine getrennte Führung bzw. Schleife für jedes Zugglied und jeden Wagen zu bilden;
Antriebsmittel (3, 6) die mit jedem Paar Umlenkscheiben (15, 17) zum Bewegen des Zuggliedes (14¹, 14², 16¹, 16²) und als Reaktion darauf, der entsprechenden Brücken- und Transportwagen (2¹, 2², 5¹, 5²) verbunden sind, **dadurch gekennzeichnet**, daß Spannungseinstellmittel (31) an den Brücken- und Transportwagen (2¹, 2², 5¹, 5²) zwischen den Scheiben (15, 17) zum Einstellen der Spannung des langgestreckten Zuggliedes (14¹, 14², 16¹, 16²) ohne Einstellen des Abstandes zwischen den Umlenkscheiben angeordnet sind.

2. Ein Transportmittel nach Anspruch 1, bei dem das Hubmittel einen aufrechten Balken bzw. Träger umfaßt, der mit einem Paar paralleler Führungsschienen zum Führen der vertikalen Bewegung des Trägers versehen ist, wenn ein Gegenstand angehoben oder abgesenkt wird.

3. Transportmittel nach Anspruch 1 oder 2, **dadurch gekennzeichnet**, daß das Zugglied (14¹, 14², 16¹, 16²) ein Zahnriemen ist.

4. Transportmittel nach Anspruch 1, 2 oder 3, **dadurch gekennzeichnet,** daß der Brückenträger (2¹, 2²) eine Rolleneinheit (18) umfaßt, die zum Laufen innerhalb des Brückenabschnitts (1¹, 1²) angeordnet ist, und daß der Brückenwagen hängend montiert und von der Rolleneinheit getragen ist.

5. Transportmittel nach einem der Ansprüche 1 bis 4, **dadurch gekennzeichnet**, daß der Transportwagen angeordnet ist, um innerhalb des Transportabschnittes (4¹, 4²) zu laufen, und daß der Transportwagen hängend montiert und von der Rolleneinheit getragen ist.

6. Transportmittel nach einem der Ansprüche 1 bis 5, **dadurch gekennzeichnet**, daß das Transportmittel einen ersten Aufnehmer bzw. Abtaster (10) zur Bestimmung der Position der Brückenwagen (2¹, 2²), einen zweiten Aufnehmer bzw. Abtaster (11) zur Bestimmung der Position der Transportwagen (5¹, 5²), einen dritten Aufnehmer bzw. Abtaster (12) zur Bestimmung der Position der Hubmittel und Steuermittel (13) zum Verarbeiten der Signale von den Aufnehmern und zur Steuerung der Bewegungen der Transportmittel umfaßt.

7. Transportmittel nach Anspruch 6, **dadurch gekennzeichnet**, daß die ersten (10), zweiten (11) und dritten (12) Aufnehmer Impulstransmitter, vorzugsweise optische Inkrementtransmitter, sind, die zum Übertragen von Signalen an die Steuermittel (13) angeordnet sind.

8. Transportmittel nach einem der Ansprüche 1 bis 7, **dadurch gekennzeichnet**, daß das Hubmittel (8) einen aufrechten Balken bzw. Träger (19), versehen mit auf entgegengesetzten Seiten befestigten parallelen Führungsschienen (20), umfaßt, daß der Hubrahmen (7) Führungsrolleneinheiten (21) umfaßt und daß die Führungsschienen und Führungsrolleneinheiten derart angeordnet sind, daß sie im Zusammenwirken die vertikale Bewegung des aufrechten Trägers führen.

9. Transportmittel nach Anspruch 8, **dadurch gekennzeichnet**, daß die Führungsrolleneinheit (21) zwei Seitenräder (22) umfaßt, die auf jeder Seite gegen die Führungsschiene (20) zur Anlage kommen, daß die Drehachsen (23) der Seitenräder in Bezug auf ihre Befestigungsachsen (24) exzentrisch sind und daß durch Drehen der Befestigungsachsen das Spiel zwischen der Führungsschiene und den Seitenrädern einstellbar ist.

10. Transportmittel nach Anspruch 8 oder 9, **dadurch gekennzeichnet,** daß das Hubmittel (8) eine mit dem aufrechten Träger (19) und parallel dazu verbundene Kette (25) oder ein Äquivalent dazu; ein Treibrad (26), das mit der Kette mittels eines Transmissionsgetriebes in Verbindung steht; und ein Antriebsmittel (9) umfaßt, das angeordnet ist, das Treibrad in Drehung zu versetzen.

11. Transportmittel nach Anspruch 10, **dadurch gekennzeichnet**, daß das Treibrad (26) im Abstand zu dem aufrechten Träger angeordnet ist und das Hubmittel seitliche Räder (27 und 28) umfaßt, die zum Umlenken der Kette (25) zu dem Treibrad angeordnet sind.

12. Transportmittel nach einem der Ansprüche 1 bis 11, **dadurch gekennzeichnet**, daß das Antriebsmittel (3, 6, 9) ein Kurzschluß(läufer)motor ist.

13. Transportmittel nach einem der Ansprüche 1 bis 12, **dadurch gekennzeichnet,** daß die Antriebsmittel (3 und 6) Kurzschlußmotoren sind, die mit Hilfe von Frequenzwandlern zur Steuerung der Geschwindigkeiten gesteuert werden.

14. Transportmittel nach einem der Ansprüche 1 bis 13, **dadurch gekennzeichnet,** daß der Innenraum des aufrechten Trägers (19) und/oder des Hubrahmens (7) einen Vakuumbehälter zur Sicherung des Vakuums für die Vakuum-betriebenen Betätigungsmittel (30) bilden.

## Revendications

1. Moyen de transport destiné au transport d'objets, comprenant :
deux sections de pont (1¹, 1²) parallèles et horizontales montées côte-à-côte lesdites sections de pont étant de configuration en caisson :
deux chariots de pont (2¹, 2²) formant paire, incluant un moyen moteur d'entraînement (3) monté sur ceux-ci, lesdits chariots de pont étant supportés par lesdites sections de pont (1¹, 1²) et mobiles sur celles-ci ;
deux sections de transport (4¹, 4²) formant paire, parallèles et horizontales montées côte-à-côte étant sensiblement à angle droit desdites deux sections de pont (1¹, 1²), lesdites sections de transport étant supportées par lesdits deux chariots de pont (2¹, 2²), lesdites sections de transport ayant une configuration en caisson ;
deux chariots de transport (5¹, 5²) formant paire, ayant un moyen moteur d'entraînement (6), lesdits chariots de transport étant montés sur lesdites deux sections de transport (4¹, 4²) et mobiles sur celles-ci ;
un cadre de levage (7) supporté par lesdits chariots de transport (5¹, 5²) ;
un moyen de levage (8) destiné à lever des objets y compris le moyen d'entraînement (9), ledit moyen de levage étant monté sur ledit cadre de levage (7) afin de déplacer des objets verticalement ;
un élément de traction allongé (14¹, 14²) sur chacun desdits chariots de pont (2¹, 2²) afin de déplacer lesdites sections de transport (4¹, 4²) et un élément de traction allongé (16¹, 16²) sur chacune desdites sections de transport (4¹, 4²) afin de déplacer chaque chariot de transport (5¹, 5²), lesdits éléments de traction allongés étant disposés le long et à l'intérieur d'une partie substantielle d'une longueur desdites sections ;
des poulies de renvoi (15, 17) placées par paires sur lesdites sections de pont (1¹, 1²) et lesdites sections de transport (4¹, 4²) à un intervalle fixe entre lesdites paires de poulies, un élément de traction étant disposé pour être déplacé depuis chacune desdites paires de poulies de renvoi, à partir d'une extrémité de chacun desdits chariots de pont et de transport, par dessus lesdites poulies de renvoi et en retour vers lesdits chariots de pont et de transport, à leur extrémité restante, afin de former une boucle séparée de chacun des éléments de traction et de chaque chariot ;
des moyens moteur d'entraînement (3, 6) raccordés auxdites paires de poulies de renvoi (15, 17) afin de déplacer ledit élément de traction (14¹, 14², 16¹, 16²) et en réponse à ce mouvement, leurs chariots de transport et de pont respectifs (2¹, 2², 5¹, 5²), caractérisé en ce que des moyens de réglage de tension (31) sont montés sur lesdits chariots de transport et de pont (2¹, 2², 5¹, 5²), lesdites poulies intermédiaires (15, 17), afin d'ajuster la tension de l'élément de traction allongé (14¹, 14², 16¹, 16²), sans ajuster l'intervalle entre lesdites poulies de renvoi.

2. Moyen de transport selon la revendication 1, dans lequel ledit moyen de levage inclut une poutre verticale munie de deux rails de guidage parallèles destinés à guider le déplacement vertical de ladite poutre lorsqu'un objet est levé ou abaissé.

3. Moyen de transport selon la revendication 1 ou 2, caractérisé en ce que l'élément de traction (14¹, 14², 16¹, 16²) est une courroie garnie de dents.

4. Moyen de transport selon la revendication 1, 2 ou 3 caractérisé en ce que le transporteur de pont (2¹, 2²) comprend un ensemble de rouleaux (18) qui a été disposé de façon à être déplacé à l'intérieur de la section de pont (1¹, 1²), et en ce que le chariot de pont est installé afin d'être suspendu, et supporté par ledit ensemble de rouleaux.

5. Moyen de transport selon l'une quelconque des revendications 1 à 4, caractérisé en ce que le chariot de transport disposé de façon à être déplacé à l'intérieur de la section de transport (4¹, 4²) ; et en ce que le chariot de transport est installé de façon à être suspendu, et supporté par un ensemble de rouleaux.

6. Moyen de transport selon l'une quelconque des revendications 1 à 5, caractérisé en ce que le moyen de transport comprend un premier capteur (10) destiné à déterminer la position des chariots de pont (2¹, 2²) ; un deuxième capteur (11) destiné à déterminer la position des chariots de transport (5¹, 5²) ; un troisième capteur (12) destiné à déterminer la position de moyens de levage ; et un moyen de commande (13) destiné à traiter les signaux en provenance desdits capteurs et à commander les déplacements du moyen de transport.

7. Moyen de transport selon la revendication 6, caractérisé en ce que le premier (10), le deuxième (11) et le troisième (12) capteurs sont des émetteurs d'impulsion, d'une manière avantageuse des émetteurs par paliers optiques qui ont été disposés de façon à émettre des signaux vers le moyen de commande (13).

8. Moyen de transport selon l'une quelconque des revendications 1 à 7, caractérisé en ce que les moyens de levage (8) comprennent une poutre verticale (19), munie de rails de guidage parallèles (20) fixés sur des côtés opposés ; le cadre de levage (7) comprend des ensembles de rouleaux de guidage (21), et en ce que les rails de guidage et les ensembles de rouleaux de guidage sont disposés de telle façon qu'ils guident, ensemble, le déplacement vertical de la poutre verticale.

9. Moyen de transport selon la revendication 8, caractérisé en ce que l'ensemble de rouleaux de guidage (21) comprend deux roues latérales (22) qui reposent contre le rail de guidage (20) sur l'un ou l'autre côté de celui-ci ; en ce que les axes de rotation (23) des roues latérales sont excentrés par rapport à leurs axes de fixation (24), et en ce que, lors de la rotation des axes de fixation, le jeu entre le rail de guidage et les roues latérales peut être ajusté.

10. Moyen de transport selon la revendication 8 ou 9, caractérisé en ce que les moyens de levage (8) comprennent une chaîne (25) ou un équivalent raccordée à la poutre verticale (19) et parallèle à celle-ci ; une roue de traction (25) qui communique avec la chaîne par le biais d'une transmission par engrenage ; et un moyen moteur d'entraînement (9) qui a été disposé de façon à faire tourner la roue motrice.

11. Moyen de transport selon la revendication 10, caractérisé en ce que la roue motrice (26) a été disposée à une certaine distance de la poutre verticale (19) et le moyen de levage comprend des roues transversales de roulement (27) et (28), qui ont été disposées de façon à faire dévier la chaîne (25) vers la roue motrice.

12. Moyen de transport selon l'une quelconque des revendications 1 à 11, caractérisé en ce que le moyen d'entraînement (3, 6, 9) sont un moteur à cage d'écureuil.

13. Moyen de transport selon l'une quelconque des revendications 1 à 12, caractérisé en ce que les moyens d'entraînement (3) et (6) sont un moteur à cage d'écureuil commandé à l'aide de convertisseurs de fréquence, afin de commander les vitesses.

14. Moyen de transport selon l'une quelconque des revendications 1 à 13, caractérisé en ce que l'espace intérieur de la poutre verticale (19) et/ou du cadre de levage (7) constitue un réservoir de vide permettant de sauvegarder du vide, pour les moyens d'action fonctionnant au vide (30).
